# EUROPÄISCHE PATENTSCHRIFT

(11) **EP 4 301 123 B1**
(45) Veröffentlichungstag und Bekanntmachung des Hinweises auf die Patenterteilung: **04.06.2025**
(21) Anmeldenummer: 21759324.3
(22) Anmeldetag: 24.08.2021
(51) Int. Cl.: A01B 35/22, A01B 15/06

(54) **WERKZEUGWECHSELSYSTEM FUER BODENBEARBEITUNGSMASCHINEN**
TOOL CHANGE SYSTEM FOR GROUND CULTIVATING MACHINES
SYSTÈME DE CHANGEMENT D'OUTIL POUR MACHINES DE CULTURE DU SOL

(30) Priorität: 04.03.2021 DE 102021105179
(43) Veröffentlichungstag der Anmeldung: 10.01.2024
(73) Patentinhaber: Amazonen-Werke H. Dreyer SE & Co. KG, 49205 Hasbergen (DE)
(72) Erfinder: DIETRICH, Robert, 04651 Flößbeg (DE); RESCH, Rainer, 49170 Hagen a TW (DE); MAHLER, Tom, 04249 Leipzig (DE)
(86) Internationale Anmeldenummer: PCT/EP2021/073321
(87) Internationale Veröffentlichungsnummer: WO 2022/184284

(56) Entgegenhaltungen:
- EP-A1- 1 723 841
- DE-A1- 2 365 914
- US-A- 4 799 555
- US-B2- 7 255 179

## Beschreibung

Die Erfindung betrifft ein Werkzeugwechselsystem für Bodenbearbeitungsmaschinen nach dem Oberbegriff des Patentanspruchs 1, ein Bodenbearbeitungswerkzeug nach dem Oberbegriff des Patentanspruchs 14 und ein Verfahren zum Montieren eines Bodenbearbeitungswerkzeugs nach dem Oberbegriff des Patentanspruchs 15.

Landwirtschaftliche Bodenbearbeitungsmaschinen, beispielsweise landwirtschaftliche Hackmaschinen, können mit einem Werkzeugwechselsystem ausgestattet sein, welches den Wechsel der eingesetzten Bodenbearbeitungswerkzeuge vereinfachen und/oder beschleunigen soll. Als Bodenbearbeitungswerkzeuge werden in der Hacktechnik beispielsweise Scharplatten eingesetzt, welche während der Verwendung einem vergleichsweise hohen Verschleiß unterliegen, sodass ein regelmäßiger Werkzeugwechsel erforderlich ist. Darüber hinaus werden landwirtschaftliche Bodenbearbeitungsmaschinen üblicherweise mit unterschiedlichen Bodenbearbeitungswerkzeugen verwendet, welche auf einen spezifischen Bearbeitungsvorgang, einen spezifischen Bodentyp und/oder auf die Erfordernisse einer spezifischen Kulturpflanze angepasst sind.

In der Praxis werden häufig Werkzeugschnellwechselsysteme eingesetzt, bei welchen das Bodenbearbeitungswerkzeug mit dem Werkzeugträger mittels einer Schraube zu verschrauben ist. Der Schraubenkopf ist dabei an der Unterseite des Bodenbearbeitungswerkzeugs angeordnet, sodass dieser sich während des Bearbeitungsvorgangs mit Erde und Pflanzenresten zusetzt, wodurch ein nachträgliches Lösen der Schraube häufig problematisch ist. Insbesondere bei hohen Arbeitslasten, beispielsweise bei der Bearbeitung von steinigen Böden, kommt es außerdem häufig zum Bruch der eingesetzten Befestigungsschrauben, sodass sich das Bodenbearbeitungswerkzeug während des Bearbeitungsvorgangs, meist unbemerkt vom Maschinenbediener, von dem Werkzeugträger löst. In der Praxis besteht außerdem das Problem, dass eine Schraubenbefestigung sich bei langer Nutzungsdauer selbsttätig löst, wodurch es zu Verkantungen des Bodenbearbeitungswerkzeugs während des Bearbeitungsvorgangs kommen kann. Entsprechende Verkantungen führen nicht selten zu einer Beschädigung des Bodenbearbeitungswerkzeugs. Darüber hinaus sind die erforderlichen Anzugkräfte entsprechender Schraubverbindungen nur unter Verwendungen von geeignetem Werkzeug erzeugbar, sodass ein werkzeugloser Wechsel des Bodenbearbeitungswerkzeugs nicht möglich ist. In der Praxis stellt üblicherweise auch die Zugänglichkeit des an der Unterseite angeordneten Schraubenkopfes ein Problem dar.

Ein entsprechendes Werkzeugwechselsystem, bei welchem die Werkzeugbefestigung über Schrauben erfolgt, ist beispielsweise aus der Druckschrift US 4,799,555 bekannt. Weitere Werkzeugwechselsysteme sind in den Dokumenten EP 1 723 841 A1, DE 23 65 914 A1 und US 7 255 179 B2 offenbart.

Die der Erfindung zugrundeliegende Aufgabe besteht somit darin, den Wechsel von Bodenbearbeitungswerkzeugen an einer landwirtschaftlichen Bodenbearbeitungsmaschine zu vereinfachen und/oder zu beschleunigen.

Die Aufgabe wird gelöst durch ein Werkzeugwechselsystem der eingangs genannten Art, wobei die Verriegelungseinrichtung des erfindungsgemäßen Werkzeugwechselsystems einen Spannhebel umfasst, mittels welchem der Eingriffsmechanismus verriegelbar ist.

Durch die Verwendung eines Spannhebels kann auf eine Schrauben- oder Bolzenbefestigung des Bodenbearbeitungswerkzeugs verzichtet werden, sodass kein Wechselwerkzeug zum Montieren und Demontieren der Bodenbearbeitungswerkzeuge erforderlich ist. Dadurch, dass Befestigungsglieder, wie beispielsweise Schrauben oder Bolzen, entfallen, stellen auch hohe Arbeitslasten während der Bodenbearbeitung kein Problem dar, da das Werkzeugwechselsystem keine filigranen bruchgefährdeten Befestigungsglieder aufweist.

Das Bodenbearbeitungswerkzeug kann beispielsweise eine Scharplatte sein. Das Werkzeugwechselsystem ist beispielsweise für die Verwendung mit einer landwirtschaftlichen Hackmaschine ausgelegt. Der Werkzeugträger weist vorzugsweise eine längliche Grundform auf. Der Werkzeugträger kann ein einstückiges Bauteil sein. Beispielsweise ist der Werkzeugträger ein Trägerstiel oder eine Trägerstange. Der Werkzeugträger ist vorzugsweise aus Metall oder einer Metalllegierung ausgebildet. Der Spannhebel weist vorzugsweise eine längliche Grundform auf. Der Spannhebel kann ein einstückiges Bauteil sein. Vorzugsweise ist der Spannhebel aus Metall oder einer Metalllegierung ausgebildet.

In einer bevorzugten Ausführungsform des erfindungsgemäßen Werkzeugwechselsystems weist der Spannhebel einen Verriegelungsabschnitt auf, welcher in eine Hebelaufnahmeausnehmung des Eingriffsmechanismus einsetzbar ist. Vorzugsweise ist die Hebelaufnahmeausnehmung in dem Bodenbearbeitungswerkzeug angeordnet. Durch das Einsetzen des Verriegelungsabschnitts des Spannhebels in die Hebelaufnahmeausnehmung erfolgt vorzugsweise eine Vorverriegelung des Eingriffsmechanismus. Zum Herbeiführen eines finalen Verriegelungszustands ist der Spannhebel vorzugsweise noch in eine Verriegelungsstellung zu verbringen, wobei das Verbringen des Spannhebels in eine Verriegelungsstellung mit einem Verspannen des Bodenbearbeitungswerkzeugs an dem Werkzeugträger einhergeht. Die Hebelaufnahmeausnehmung ist vorzugsweise in einem hinteren freien Bereich des Bodenbearbeitungswerkzeugs angeordnet. Die Hebelaufnahmeausnehmung ist nach In-Eingriff-Bringen von Bodenbearbeitungswerkzeug und Werkzeugträger von der Hinterseite des Bodenbearbeitungswerkzeugs zugänglich, sodass der Spannhebel in einfacher Weise von hinten-oben einsetzbar ist. Hierdurch ist eine gefahrlose und einfache Montage des Bodenbearbeitungswerkzeugs möglich, da keine Montagevorgänge an der Unterseite des Bodenbearbeitungswerkzeugs ausgeführt werden müssen.

In einer weiteren bevorzugten Ausführungsform des erfindungsgemäßen Werkzeugwechselsystems sind das Bodenbearbeitungswerkzeug und der Werkzeugträger mittels des Spannhebels miteinander verspannbar. Beim Verspannen des Bodenbearbeitungswerkzeugs und des Werkzeugträgers wird das Bodenbearbeitungswerkzeug durch den Spannhebel nach hinten gedrückt oder gezogen. Das Bodenbearbeitungswerkzeug und der Werkzeugträger können beim Verspannen zunächst eine Relativbewegung zueinander ausführen. Durch das Ausführen der Relativbewegung von Bodenbearbeitungswerkzeug und Werkzeugträger werden diese zueinander positioniert und aneinander vorarretiert. Das Verspannen des Bodenbearbeitungswerkzeugs und des Werkzeugträgers erfolgt vorzugsweise durch Verbringen des Spannhebels in eine Verriegelungsstellung nach dem Einsetzen des Spannhebels in die Hebelaufnahmeausnehmung. Hierzu ist der Spannhebel nach dem Einsetzen des Spannhebels in die Hebelaufnahmeausnehmung beispielsweise nach oben zu verschwenken. Der Spannhebel übt in der Verriegelungsstellung eine Spannkraft auf das Bodenbearbeitungswerkzeug und/oder den Werkzeugträger aus, über welche das Bodenbearbeitungswerkzeug und der Werkzeugträger aneinander befestigt werden.

Im unverspannten Zustand, also vor dem Bewegen des Spannhebels in die Verriegelungsstellung, kann der Eingriffsmechanismus eine Lösebewegung des Bodenbearbeitungswerkzeugs und/oder des Werkzeugträgers erlauben, durch welche der Eingriff zwischen Bodenbearbeitungswerkzeug und Werkzeugträger aufgelöst werden kann. Die von dem Spannhebel nach Verbringen des Spannhebels in die Verriegelungsstellung verursachte Spannkraft wirkt entgegen der Löserichtung, sodass eine Lösebewegung des Bodenbearbeitungswerkzeugs und/oder des Werkzeugträgers durch den Spannhebel verhindert wird.

In einer Weiterbildung des erfindungsgemäßen Werkzeugwechselsystems weist der Spannhebel einen Werkzeugkontaktbereich auf, welcher dazu eingerichtet ist, beim Verspannen des Bodenbearbeitungswerkzeugs und des Werkzeugträgers miteinander gegen die Kontur der Hebelaufnahmeausnehmung gedrückt zu werden. Der Werkzeugkontaktbereich befindet sich vorzugsweise in dem Verriegelungsabschnitt des Spannhebels, welcher in die Hebelaufnahmeausnehmung des Eingriffsmechanismus eingesetzt wird. Beim Verbringen des Spannhebels in die Verriegelungsstellung und/oder in der Verriegelungsstellung befindet sich der Werkzeugkontaktbereich des Spannhebels in Kontakt mit der Kontur der Hebelaufnahmeausnehmung.

In einer anderen Ausführungsform des erfindungsgemäßen Werkzeugwechselsystems weist der Spannhebel einen Trägerkontaktbereich auf, welcher dazu eingerichtet ist, beim Verspannen des Bodenbearbeitungswerkzeugs und des Werkzeugträgers miteinander gegen einen Hebelführungsbereich des Werkzeugträgers gedrückt zu werden. Beim Verbringen des Spannhebels in die Verriegelungsstellung und/oder in der Verriegelungsstellung befindet sich der Trägerkontaktbereich des Spannhebels vorzugsweise in Kontakt mit dem Hebelführungsbereich des Werkzeugträgers.

Es ist darüber hinaus ein erfindungsgemäßes Werkzeugwechselsystem vorteilhaft, bei welchem der Trägerkontaktbereich des Spannhebels eine konvex gekrümmte Kontaktfläche aufweist. Der Trägerkontaktbereich des Spannhebels weist vorzugsweise eine konvexe Abrundung auf. Alternativ oder zusätzlich kann der Hebelführungsbereich des Werkzeugträgers eine konkav gekrümmte Kontaktfläche aufweisen. Vorzugsweise weist der Hebelführungsbereich des Werkzeugträgers eine konkave Abrundung auf. Die konvex gekrümmte Kontaktfläche am Spannhebel und die konkav gekrümmte Kontaktfläche am Werkzeugträger weisen vorzugsweise übereinstimmende Radien auf. Die konvex gekrümmte Kontaktfläche am Spannhebel und die konkav gekrümmte Kontaktfläche am Werkzeugträger bilden vorzugsweise gemeinsam ein offenes Gleitlager für den Spannhebel. Die Kontaktflächen im Trägerkontaktbereich und im Hebelführungsbereich können zumindest abschnittsweise kugelförmig ausgebildet sein.

Es ist darüber hinaus ein erfindungsgemäßes Werkzeugwechselsystem vorteilhaft, bei welchem der Trägerkontaktbereich und der Hebelführungsbereich gemeinsam ein Drehlager für den Spannhebel bilden, welches eine geführte Drehbewegung des Spannhebels über einen Schwenkwinkelbereich erlaubt. Das Ausführen der Drehbewegung des Spannhebels über den Schwenkwinkelbereich ist vorzugsweise erforderlich, um den Spannhebel nach dem Einsetzen in die Hebelaufnahmeausnehmung in die Verriegelungsstellung zu verbringen.

Das erfindungsgemäße Werkzeugwechselsystem wird ferner dadurch vorteilhaft weitergebildet, dass der Spannhebel dazu eingerichtet ist, beim Verspannen des Bodenbearbeitungswerkzeugs und des Werkzeugträgers miteinander elastisch verformt zu werden. Vorzugsweise wird der Spannhebel beim Verspannen des Bodenbearbeitungswerkzeugs und des Werkzeugträgers miteinander elastisch verbogen. Der Spannhebel kann beispielsweise ein Federstab sein. Vorzugsweise wird der Spannhebel beim Verbringen in die Verriegelungsstellung elastisch verformt, insbesondere elastisch verbogen.

In einer anderen bevorzugten Ausführungsform des Werkzeugwechselsystems weist die Verriegelungseinrichtung ein Halteglied auf, welches dazu eingerichtet ist, den Spannhebel in einer Verriegelungsstellung, in welcher das Bodenbearbeitungswerkzeug und der Werkzeugträger mittels des Spannhebels miteinander verspannt sind, zu halten. Vorzugsweise ist das Drehlager entfernt von dem Halteglied angeordnet, sodass ein günstiges Hebelverhältnis entsteht. Durch Ausnutzung des Hebeleffekts kann über eine vergleichsweise geringe Betätigungskraft eine vergleichsweise hohe das Bodenbearbeitungswerkzeug und den Werkzeugträger miteinander verspannende Spannkraft erzeugt werden. Auf diese Weise kann trotz des Verzichts auf separates Montagewerkzeug eine robuste Spannverriegelung von Bodenbearbeitungswerkzeug und Werkzeugträger umgesetzt werden.

Der Spannhebel kann also wahlweise per Handkraft oder mit einem zusätzlichen Werkzeug in die Verriegelungsstellung gebracht werden. Das Halteglied verhindert ein Zurückschnappen des gespannten Spannhebels. Das Halteglied kann beispielsweise ein ringförmiger Körper sein. Der Werkzeugträger kann eine Auflage für das Halteglied aufweisen, welcher ein unkontrolliertes Herunterfallen des Halteglieds verhindert, wenn das Halteglied nicht durch den Spannhebel fixiert wird. Das Halteglied kann auch ein Klappstecker sein. Das Halteglied kann in eine Montagehilfsposition bringbar sein, in der der Spannhebel entnehmbar am Halteglied festgelegt ist, sodass der Spannhebel beim Wechsel des Bodenbearbeitungswerkzeugs nicht verloren geht. Der Spannhebel kann in der Montagehilfsposition lose vom Halteglied herabhängen.

In dem erfindungsgemäßen Werkzeugwechselsystem ist der Spannhebel dazu eingerichtet, in der Verriegelungsstellung elastisch verformt zu sein, vorzugsweise sich in der Verriegelungsstellung entlang eines gekrümmten Kantenverlaufs des Werkzeugträgers zu erstrecken. Der gekrümmte Kantenverlauf des Werkzeugträgers, entlang welchem sich der Spannhebel in der Verriegelungsstellung erstreckt, ist vorzugsweise konvex und/oder eine hintere Abschlusskante des Werkzeugträgers.

Um zu verhindern, dass sich zwischen dem Spannhebel und dem Werkzeugträger Material wie beispielsweise Erdreich und/oder Pflanzenreste sammelt, welches ein beabsichtigtes Lösen der Spannverbindung verhindern könnte, kann der Zwischenraum zwischen dem gekrümmten Kantenverlauf des Werkzeugträgers und dem Spannhebel in der Verriegelungsstellung des Spannhebels mit einem elastisch verformbaren Material aufgefüllt sein. Das elastisch verformbare Material kann hierzu beispielsweise an der gekrümmten Kante des Werkzeugträgers und/oder an dem Spannhebel befestigt, beispielsweise aufgeklebt, sein. Das elastisch verformbare Material kann beispielsweise Moosgummi sein. Das elastisch verformbare Material füllt den Spalt lediglich elastisch aus, übernimmt aber keine Schließ- und/oder Verriegelungsfunktion. Das elastisch verformbare Material liegt in einem vom Erdstrom geschützten Bereich, sodass ein Ablösen des elastisch verformbaren Materials vom Spannhebel und/oder von dem Werkzeugträger durch den Erdstrom verhindert wird. Aufgrund der elastischen Verformbarkeit des Materials ist weiterhin ein zuverlässiges und einfaches Spannen und Lösen des Spannhebels möglich.

Das erfindungsgemäße Werkzeugwechselsystem wird ferner dadurch vorteilhaft weitergebildet, dass der Eingriffsmechanismus ein oder mehrere Eingriffskörper aufweist, wobei jeder Eingriffskörper dazu eingerichtet ist, in eine Aufnahmeausnehmung des Eingriffsmechanismus einzugreifen. Der eine oder die mehreren Eingriffskörper befinden sich vorzugsweise an der Unterseite des Werkzeugträgers. Der eine oder die mehreren Eingriffskörper sind vorzugsweise integrale Bestandteile des Werkzeugträgers. Der eine oder die mehreren Aufnahmeausnehmungen befinden sich vorzugsweise in dem Bodenbearbeitungswerkzeug. Der eine oder die mehreren Eingriffskörper ragen vorzugsweise lediglich geringfügig aus der einen oder den mehreren Aufnahmeausnehmungen heraus, sodass der eine oder die mehreren Eingriffskörper vor Verschleiß durch Kontakt mit dem Erdstrom geschützt sind. Ferner können plattenförmige Bodenbearbeitungswerkzeuge unterschiedliche Materialstärken aufweisen. Durch die Verriegelung über einen oder mehrere Eingriffskörper ist die Kompatibilität von Bodenbearbeitungswerkzeug und Werkzeugträger nicht von der Materialstärke des Bodenbearbeitungswerkzeugs abhängig. Es ergibt sich somit ein universeller und flexibel einsetzbarer Eingriffsmechanismus, welcher unabhängig von der Plattenstärke eines plattenförmigen Bodenbearbeitungswerkzeugs ist.

In einer weiteren bevorzugten Ausführungsform des erfindungsgemäßen Werkzeugwechselsystems ist ein Eingriffskörper des Eingriffsmechanismus dazu eingerichtet, in die Hebelaufnahmeausnehmung einzugreifen, in welche auch der Verriegelungsabschnitt des Spannhebels einsetzbar ist. Die Hebelaufnahmeausnehmung nimmt also sowohl einen Eingriffskörper als auch den Verriegelungsabschnitt des Spannhebels auf. Die Hebelaufnahmeausnehmung dient also zum Herstellen eines Eingriffszustands zwischen dem Bodenbearbeitungswerkzeug und dem Werkzeugträger und zur Umsetzung einer Verspannung von Bodenbearbeitungswerkzeug und Werkzeugträger miteinander.

In einer anderen bevorzugten Ausführungsform des erfindungsgemäßen Werkzeugwechselsystems weisen der eine oder die mehreren Eingriffskörper eine Kontaktfläche auf, welche dazu eingerichtet ist, beim Verspannen des Bodenbearbeitungswerkzeugs und des Werkzeugträgers jeweils gegen einen Kontaktabschnitt der Innenkontur einer Aufnahmeausnehmung gedrückt zu werden. Die Innenkontur der Aufnahmeausnehmung dient somit als Gegenlager beim Verspannen des Bodenbearbeitungswerkzeugs und des Werkzeugträgers mittels des Spannhebels.

In einer anderen bevorzugten Ausführungsform des erfindungsgemäßen Werkzeugwechselsystems weisen die Kontaktfläche des einen oder der mehreren Eingriffskörper und der Kontaktabschnitt der Innenkontur der einen oder der mehreren Aufnahmeausnehmungen korrespondierende Abfasungen auf. Durch die Abfasungen verkeilen sich das Bodenbearbeitungswerkzeug und der Werkzeugträger ineinander beim Verspannen mittels des Spannhebels. Es wird ein nahezu spielfreier Sitz des Bodenbearbeitungswerkzeugs am Werkzeugträger erreicht. Der Spannhebel sorgt für eine Aufrechterhaltung des spielfreien Sitzes während eines Bearbeitungsvorgangs, sodass das Bodenbearbeitungswerkzeug auch unter dem Einfluss von Bodenbearbeitungskräften sich nicht verkippen und/oder verdrehen kann. Vorzugsweise weisen die Eingriffskörper übereinstimmende oder voneinander abweichende Fasenwinkel auf.

Vorzugsweise weisen die Innenkonturen der Aufnahmeausnehmungen übereinstimmende oder voneinander abweichende Fasenwinkel auf. Der Fasenwinkel an den Abfasungen der Eingriffskörper und der Fasenwinkel an den Abfasungen der Innenkonturen der Aufnahmeausnehmungen liegt vorzugsweise in einem Bereich zwischen 30 Grad und 60 Grad, beispielsweise bei 45 Grad.

An dem Werkzeugträger können ferner Markierungen zur Einstellung der Position des Bodenbearbeitungswerkzeugs und/oder zur Einstellung der Arbeitstiefe vorhanden sein. Die Markierungen können eine Skala zur Vornahme einer Höheneinstellung bilden. Durch die Markierungen kann auf eine Rasterung im Kantenbereich des Werkzeugträgers verzichtet werden.

In einer weiteren bevorzugten Ausführungsform des erfindungsgemäßen Werkzeugwechselsystems ist der Spannhebel als Drahtbiegeteil ausgeführt. Insbesondere ist der Spannhebel als Federbügel ausgeführt. Der Spannhebel kann in dieser Ausführungsform U-förmig ausgeführt sein, so dass sich zwei offene Enden des Drahtbiegeteils unmittelbar gegenüberliegen und/oder sich an dem geschlossenen Ende des Drahtbiegeteils eine Schlaufe ergibt. Die Kontur des Spannhebels kann spiegelsymmetrisch sein, so dass sie sich durch zwei symmetrisch, insbesondere unmittelbar nebeneinander, verlaufende Drahtenden ergibt. Infolge dieser Ausführungsform weist der Spannhebel eine offene Form auf, so dass das Risiko anhaftenden Bodenmaterials und sich verfangender Pflanzenreste besonders reduziert ist. Der Werkzeugträger kann in dieser Ausführungsform, insbesondere an seiner Hinterseite, ein, vorzugsweise hakenförmiges, Halteglied aufweisen, welches dazu eingerichtet ist, den Spannhebel in einer Verriegelungsstellung, in welcher das Bodenbearbeitungswerkzeug und der Werkzeugträger mittels des Spannhebels miteinander verspannt sind, zu halten. Der Spannhebel kann das Halteglied in der Verriegelungsstellung, insbesondere mittels der Schlaufe an seinem geschlossenen Ende, hintergreifen.

Die der Erfindung zugrundeliegende Aufgabe wird ferner gemäß dem Gegenstand des Anspruchs 14 durch ein Bodenbearbeitungswerkzeug für ein Werkzeugwechselsystem gelöst. Das Werkzeugwechselsystem kann nach einer der vorstehenden Ausführungsformen ausgeführt sein. Es ist vorgesehen, dass das Bodenbearbeitungswerkzeug dazu eingerichtet ist, durch Erdreich bewegt zu werden. Das Bodenbearbeitungswerkzeug weist zumindest eie Aufnahmeausnehmung auf mittels der das Bodenbearbeitungswerkzeug eingerichtet ist, einen Eingriffsmechanismus mit einem Werkzeugträger zu bilden, so dass das Bodenbearbeitungswerkzeug an dem Werkzeugträger angeordnet werden kann. Erfindungsgemäß weist das Bodenbearbeitungswerkzeug eine Hebelaufnahmeausnehmung auf in die ein Spannhebel einsetzbar ist. Die Hebelaufnahmeausnehmung kann einen Verriegelungsabschnitt eines Spannhebels aufnehmen. Bezüglich der Vorteile und Modifikationen des Bodenbearbeitungswerkzeuges wird zunächst auf die die Vorteile und Modifikationen der vorstehenden Ausführungsformen des Werkzeugwechselsystems verwiesen. Das Bodenbearbeitungswerkzeug kann durch Merkmale, die sich auf das Bodenbearbeitungswerkzeug beziehen und welche im Zusammenhang mit den vorstehenden Ausführungsformen des Werkzeugwechselsystems erläutert wurden, weitergebildet werden.

Die der Erfindung zugrundeliegende Aufgabe wird ferner durch ein Verfahren der eingangs genannten Art gemäß dem Gegenstand des Anspruchs 15 gelöst, wobei der Eingriffsmechanismus im Rahmen des erfindungsgemäßen Verfahrens mittels eines Spannhebels einer Verriegelungseinrichtung des Werkzeugwechselsystems verriegelt wird. Das erfindungsgemäße Verfahren wird vorzugsweise unter Verwendung eines Werkzeugwechselsystems nach einer der vorstehend beschriebenen Ausführungsformen ausgeführt, sodass hinsichtlich der Vorteile und Modifikationen des erfindungsgemäßen Verfahrens auf die Vorteile und Modifikationen des erfindungsgemäßen Werkzeugwechselsystems verwiesen wird.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Werkzeugwechselsystems in einem vorverriegelten Zustand;
- Fig. 2: das in der Fig. 1 abgebildete Werkzeugwechselsystem in einem verriegelten Zustand;
- Fig. 3: den Eingriffsmechanismus des in der Fig. 1 abgebildeten Werkzeugwechselsystems in einer Schnittdarstellung;
- Fig. 4: ein weiteres Ausführungsbeispiel des erfindungsgemäßen Werkzeugwechselsystems vor dem Einsetzen des Spannhebels;
- Fig. 5: das in der Fig. 4 abgebildete Werkzeugwechselsystem in einem vorverriegelten Zustand nach dem Einsetzen des Spannhebels in einer perspektivischen Darstellung;
- Fig. 6: das in der Fig. 4 abgebildete Werkzeugwechselsystem beim Bewegen des Spannhebels in die Verriegelungsstellung in einer Seitenansicht;
- Fig. 7: das in der Fig. 4 abgebildete Werkzeugwechselsystem beim Einbringen des Spannhebels in das Halteglied;
- Fig. 8: ein weiteres Ausführungsbeispiel des erfindungsgemäßen Werkzeugwechselsystems beim Bewegen des Spannhebels in die Verriegelungsstellung in einer Seitenansicht;
- Fig. 9: ein weiteres Ausführungsbeispiel des erfindungsgemäßen Werkzeugwechselsystems in einem vorverriegelten Zustand nach dem Einsetzen des Spannhebels in einer perspektivischen Darstellung;
- Fig. 10: das in der Fig. 9 abgebildete Werkzeugwechselsystem beim Bewegen des Spannhebels in die Verriegelungsstellung in einer Seitenansicht; und
- Fig. 11: das in der Fig. 9 abgebildete Werkzeugwechselsystem beim Bewegen des Spannhebels in die Verriegelungsstellung mit Hilfe eines Montagewerkzeuges.

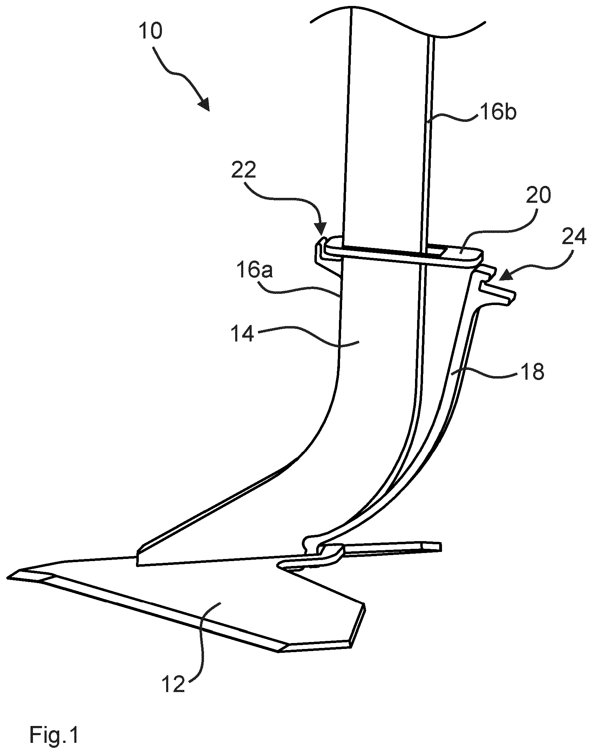

Die Fig. 1 zeigt ein Werkzeugwechselsystem 10 für eine landwirtschaftliche Bodenbearbeitungsmaschine. Das Werkzeugwechselsystem 10 umfasst ein Bodenbearbeitungswerkzeug 12, welches mit einem Werkzeugträger 14 in Eingriff steht. Das Bodenbearbeitungswerkzeug 12 kann beispielsweise eine Scharplatte sein, welche im Rahmen der Bodenbearbeitung in einer geringen Tiefe durch das Erdreich bewegt wird. Das Bodenbearbeitungswerkzeug 12 weist eine V-förmige Plattenform auf und ist als einstückiger Metallkörper ausgebildet. Der Werkzeugträger 14 weist eine längliche Grundform auf und ist als einstückige Trägerstange aus Metall ausgebildet.

Das Bodenbearbeitungswerkzeug 12 und der Werkzeugträger 14 können mittels eines Spannhebels 18 miteinander verspannt werden.

Die Fig. 1 zeigt das Werkzeugwechselsystem 10 in einem vorverriegelten Zustand, in welchem der Spannhebel 18 bereits in eine Hebelaufnahmeausnehmung (verdeckt) eines Eingriffsmechanismus eingesetzt wurde.

Zum Verspannen des Bodenbearbeitungswerkzeugs 12 und des Werkzeugträgers 14 und zum Verriegeln des Eingriffsmechanismus ist der Spannhebel 18 in den Nahbereich der hinteren Außenkante 16b des Werkzeugträgers 14 zu bringen.

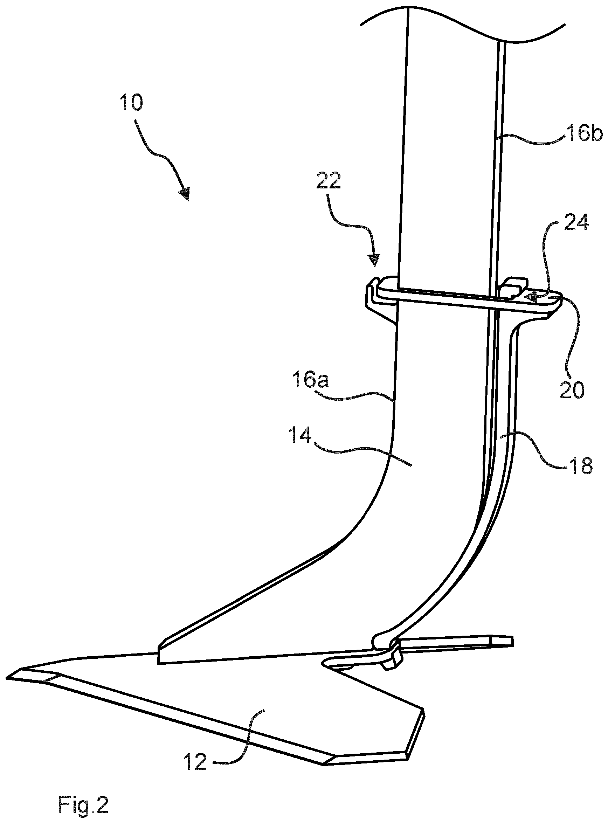

Die Fig. 2 zeigt den verriegelten Zustand, in welchem sich der Spannhebel 18 in einer Verriegelungsstellung befindet und sich entlang einer konvex gekrümmten hinteren Abschlusskante 16b des Werkzeugträgers 14 erstreckt. Der Spannhebel 18 kann manuell und ohne Werkzeugeinsatz in die Verriegelungsstellung gebracht werden. Das Werkzeugwechselsystem 10 weist ein Halteglied 20 auf, welches den Spannhebel 18 in der Verriegelungsstellung hält und ein Zurückschnappen des gespannten Spannhebels 18 verhindert. Das Halteglied 20 ist ein ringförmiger Körper, welcher in einem vorderen Bereich auf einer Auflage 22 des Werkzeugträgers 14 aufliegt. Die Auflage 22 befindet sich an der vorderen Kante 16a des Werkzeugträgers 14. Der Spannhebel 18 weist in einem oberen Endbereich eine Konturierung 24 auf. Die Konturierung 24 besteht aus einer Einbuchtung, welche durch zwei voneinander beabstandete Materialstege gebildet wird. Die Einbuchtung der Konturierung 24 kann zum Sichern des Spannhebels 18 in der Verriegelungsstellung mit dem Halteglied 20 in Eingriff gebracht werden. Wenn das Halteglied 20 nicht durch den Spannhebel 18 fixiert wird, verhindert die Auflage 22 ein unkontrolliertes Herunterfallen des Halteglieds 20. In der dargestellten Verriegelungsstellung ist der Spannhebel 18 elastisch verformt.

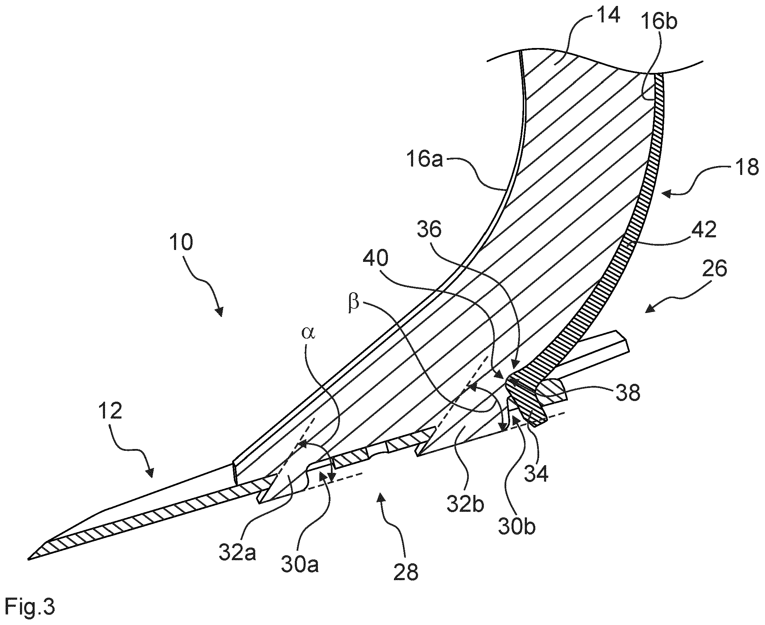

Die Fig. 3 zeigt die Verriegelungseinrichtung 26 und den Eingriffsmechanismus 28 im Detail. Der Eingriffsmechanismus 28 wird von dem Bodenbearbeitungswerkzeug 12 und dem Werkzeugträger 14 gebildet. Über den Eingriffsmechanismus 28 sind das Bodenbearbeitungswerkzeug 12 und der Werkzeugträger 14 zerstörungsfrei lösbar miteinander in Eingriff bringbar. Hierzu weist der Eingriffsmechanismus 28 zwei Eingriffskörper 32a, 32b auf, wobei jeder Eingriffskörper 32a, 32b dazu eingerichtet ist, in eine Aufnahmeausnehmung 30a, 30b des Eingriffsmechanismus 28 einzugreifen. Die Eingriffskörper 32a, 32b befinden sich an der Unterseite des Werkzeugträgers 14 und sind integrale Bestandteile des Werkzeugträgers 14. Die beiden Aufnahmeausnehmungen 30a, 30b befinden sich in dem Bodenbearbeitungswerkzeug 12. Nach dem Einsetzen der Eingriffskörper 32a, 32b in die Aufnahmeausnehmungen 30a, 30b ragen die Eingriffskörper 32a, 32b nur geringfügig aus den Aufnahmeausnehmungen 30a, 30b heraus, sodass die Eingriffskörper 32a, 32b vor Verschleiß geschützt sind. Die Eingriffskörper 32a, 32b weisen jeweils eine abgefaste Kontaktfläche auf, welche durch den Spannhebel 18 gegen abgefaste Innenkonturen der Aufnahmeausnehmungen 30a, 30b gedrückt werden. Die Abfasungen der Eingriffskörper 32a, 32b und der Innenkonturen der Aufnahmeausnehmungen 30a, 30b sorgen dafür, dass sich das Bodenbearbeitungswerkzeug 12 und der Werkzeugträger 14 ineinander verkeilen, wenn diese mittels des Spannhebels 18 miteinander verspannt werden. Die Fasenwinkel α, β der Abfasungen der Eingriffskörper 32a, 32b und der Innenkonturen der Aufnahmeausnehmungen 30a, 30b stimmen überein und betragen in dem dargestellten Ausführungsbeispiel 45 Grad.

Der Spannhebel 18 ist Bestandteil einer Verriegelungseinrichtung 26, mittels welchem der Eingriffsmechanismus verriegelbar ist. Der Spannhebel 18 weist einen Verriegelungsabschnitt 34 auf, welcher in die Aufnahmeausnehmung 30b des Eingriffsmechanismus 28 einsetzbar ist. Die Aufnahmeausnehmung 30b kann somit auch als Hebelaufnahmeausnehmung 30b bezeichnet werden.

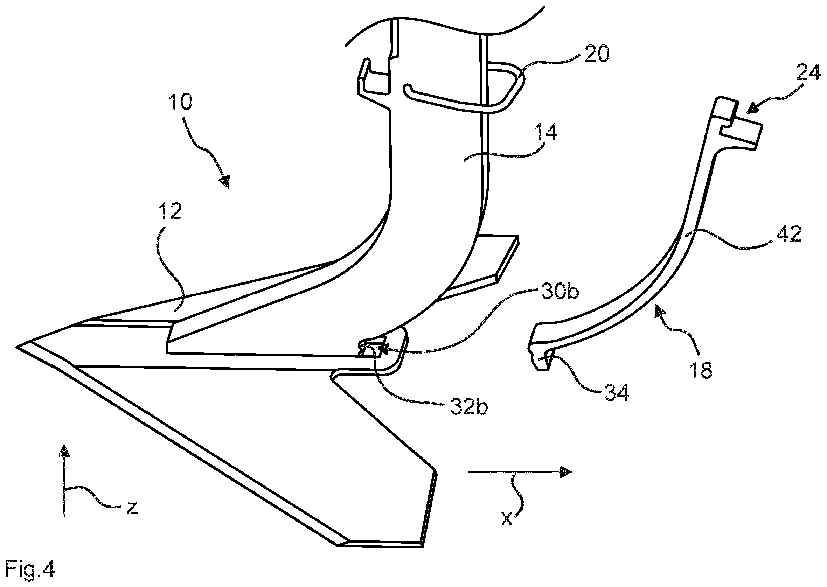

Die Fig. 4 bis 7 zeigen beispielhaft die zur Montage eines Bodenbearbeitungswerkzeugs 12 erforderlichen Schritte. Wie in der Fig. 4 angedeutet, ist zunächst das Bodenbearbeitungswerkzeug 12 mit dem Werkzeugträger 14 in Eingriff zu bringen. Hierzu wird das Bodenbearbeitungswerkzeug 12 zunächst in Vertikalrichtung z in Anschlag mit der Unterkante des Werkzeugträgers 14 gebracht. Während der Vertikalbewegung wird das Bodenbearbeitungswerkzeug 12 derart positioniert, dass die Eingriffskörper 32a, 32b des Werkzeugträgers 14 in die Aufnahmeausnehmungen 30a, 30b des Bodenbearbeitungswerkzeugs 12 eingesetzt werden. Anschließend ist das Bodenbearbeitungswerkzeug 12 in Horizontalrichtung x nach hinten zu bewegen, sodass die Eingriffskörper 32a, 32b mit den Aufnahmeausnehmungen 30a, 30b in Eingriff kommen. Durch die Horizontalbewegung des Bodenbearbeitungswerkzeugs 12 wird ein freier Bereich der Aufnahmeausnehmung 30b zugänglich gemacht, sodass der Verriegelungsabschnitt 34 des Spannhebels 18 in die Aufnahmeausnehmung 30b eingesetzt werden kann. Die Aufnahmeausnehmung 30b ist nach dem In-Eingriff-Bringen von Bodenbearbeitungswerkzeug 12 und Werkzeugträger 14 von der Hinterseite des Bodenbearbeitungswerkzeugs 12 zugänglich, sodass der Spannhebel 18 von hinten-oben in die Aufnahmeausnehmung 30b eingesetzt werden kann.

Zum Abschließen des Verriegelungsvorgangs ist der Spannhebel 18 nach dem Einsetzen in die Hebelaufnahmeausnehmung 30b noch in eine Verriegelungsstellung zu verbringen.

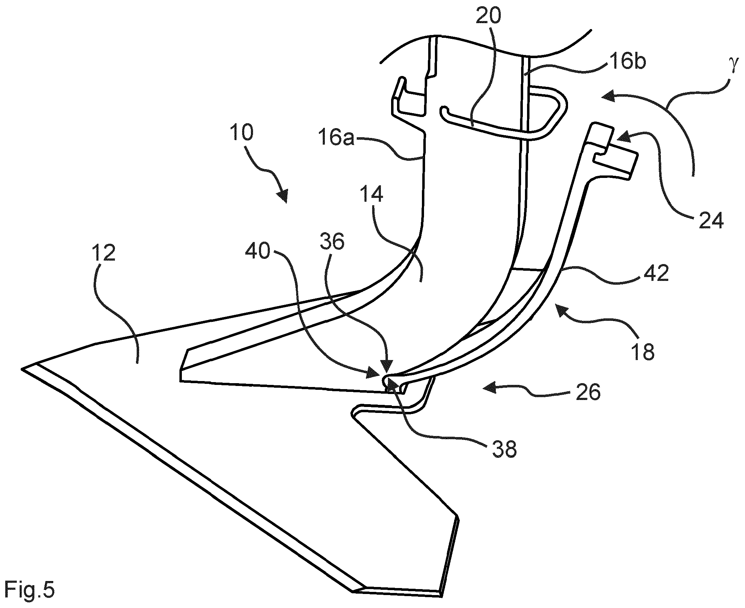

Die Fig. 5 zeigt den Spannhebel 18 während des Verschwenkens in die Verriegelungsstellung, wobei das Bodenbearbeitungswerkzeug 12 und der Werkzeugträger 14 während des Verschwenkens des Spannhebels 18 mittels des Spannhebels 18 miteinander verspannt werden. Beim Verspannen des Bodenbearbeitungswerkzeugs 12 und des Werkzeugträgers 14 wird das Bodenbearbeitungswerkzeug 12 durch den Spannhebel 18 nach hinten gedrückt. Das Bodenbearbeitungswerkzeug 12 und der Werkzeugträger 14 können in einer Anfangsphase des Verspannens zunächst eine Relativbewegung zueinander ausführen. Nach Beendigung der Relativbewegung wird über den Spannhebel 18 eine Spannkraft aufgebaut, über welche das Bodenbearbeitungswerkzeug 12 und der Werkzeugträger 14 aneinander befestigt werden. Der Spannhebel 18 weist einen Werkzeugkontaktbereich auf, welcher beim Verspannen des Bodenbearbeitungswerkzeugs 12 und des Werkzeugträgers 14 miteinander gegen die Kontur der Hebelaufnahmeausnehmung 30b gedrückt wird. Der Werkzeugkontaktbereich befindet sich in dem Verriegelungsabschnitt 34 des Spannhebels 18. Beim Verbringen des Spannhebels 18 in die Verriegelungsstellung befindet sich der Werkzeugkontaktbereich des Spannhebels 18 in Kontakt mit der Kontur Hebelaufnahmeausnehmung 30b.

Ferner weist der Spannhebel 18 einen Trägerkontaktbereich auf, welcher beim Verspannen des Bodenbearbeitungswerkzeugs 12 und des Werkzeugträgers 14 miteinander gegen einen Hebelführungsbereich des Werkzeugträgers gedrückt wird. Beim Verbringen des Spannhebels 18 in die Verriegelungsstellung befindet sich der Trägerkontaktbereich des Spannhebels 18 in Kontakt mit dem Hebelführungsbereich des Werkzeugträgers 14. Der Trägerkontaktbereich des Spannhebels 18 weist eine konvex gekrümmte Kontaktfläche 36 auf. Der Hebelführungsbereich des Werkzeugträgers 14 weist eine konkav gekrümmte Kontaktfläche 38 auf. Die konvex gekrümmte Kontaktfläche 36 am Spannhebel 18 und die konkav gekrümmte Kontaktfläche 38 am Werkzeugträger 14 bilden gemeinsam ein Gleitlager bzw. Drehlager 40 aus. Das Drehlager 40 erlaubt eine geführte Drehbewegung des Spannhebels 18 in Schwenkrichtung γ.

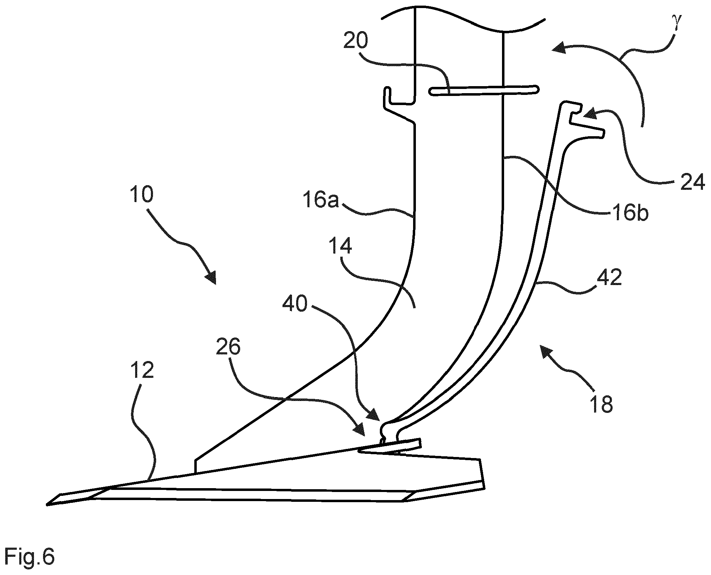

Die Fig. 6 zeigt, dass der Spannhebel 18 beim Verspannen des Bodenbearbeitungswerkzeugs 12 und des Werkzeugträgers 14 miteinander in einem Deformationsbereich 42 elastisch verformt, nämlich elastisch verbogen wird. Der Spannhebel 18 kann insofern auch als Federstab bezeichnet werden.

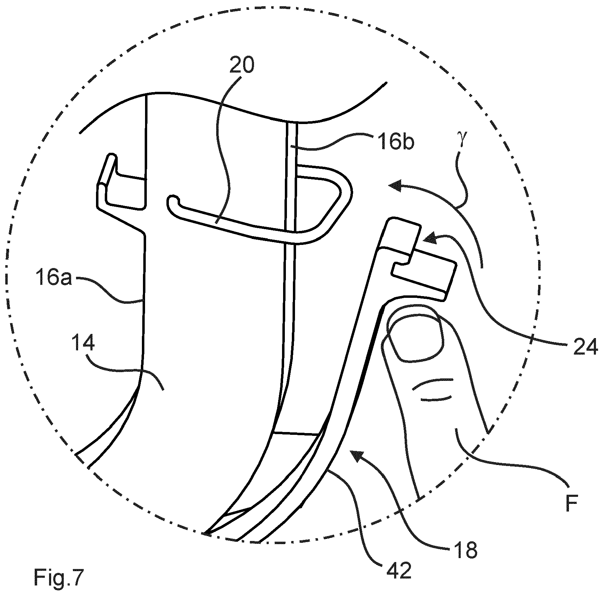

Wie die Fig. 7 zeigt, kann das Verbringen des Spannhebels 18 in die Verriegelungsstellung und das Sichern des Spannhebels 18 an dem Halteglied 20 manuell unter Verwendung eines oder mehrerer Finger F erfolgen. Nach dem Einsetzen der Konturierung 24 in das ringförmige Halteglied 20 erstreckt sich der Spannhebel 18 entlang der hinteren gekrümmten Kante 16b des Werkzeugträgers 14. Der gekrümmte Kantenverlauf des Werkzeugträgers 14 gehört zu einer hinteren Abschlusskante 16b des Werkzeugträgers 14.

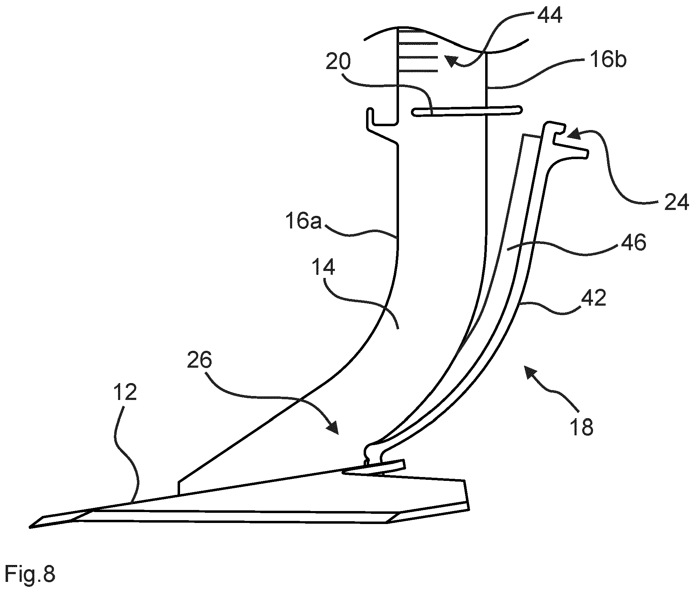

Wie die Fig. 8 zeigt, kann auf der dem Werkzeugträger 14 zugewandten Seite des Spannhebels 18 elastisch verformbares Material 46, beispielsweise Moosgummi, angeordnet sein. Mittels des elastisch verformbaren Materials 46 kann der zurückbleibende Spalt zwischen der hinteren Kante 16b des Werkzeugträgers 14 und dem Spannhebel 18 geschlossen werden, sodass sich in diesem Bereich kein Dreck ansammeln kann. An dem Werkzeugträger 14 sind ferner Markierungen 44 zur Einstellung der Position des Bodenbearbeitungswerkzeugs 12 bzw. zur Einstellung der Arbeitstiefe vorhanden. Die Markierungen 44 bilden eine Skala für die Höheneinstellung des Bodenbearbeitungswerkzeugs 12.

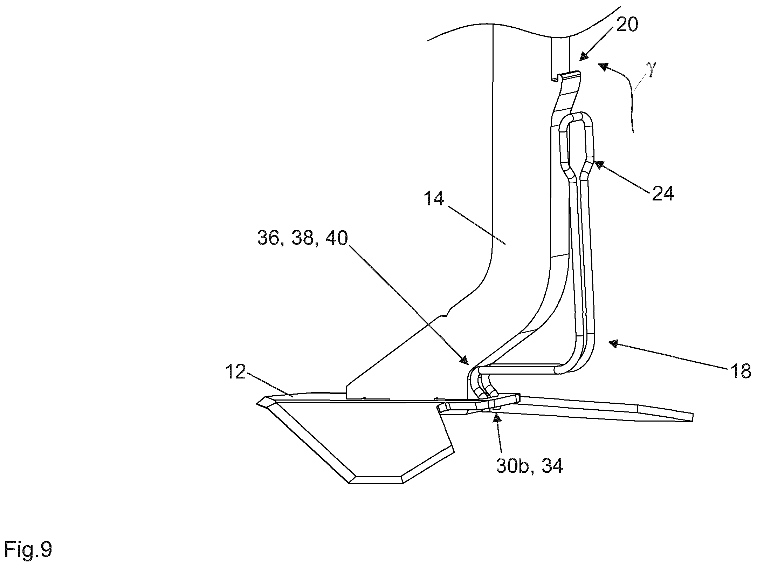

Die Fig. 9 zeigt den Spannhebel 18, der in diesem Ausführungsbeispiel als Drahtbiegeteil ausgeführt ist, während des Verschwenkens in die Verriegelungsstellung, wobei das Bodenbearbeitungswerkzeug 12 und der Werkzeugträger 14 während des Verschwenkens des Spannhebels 18 mittels des Spannhebels 18 miteinander verspannt werden. Beim Verspannen des Bodenbearbeitungswerkzeugs 12 und des Werkzeugträgers 14 wird das Bodenbearbeitungswerkzeug 12 durch den Spannhebel 18 nach hinten gedrückt. Das Bodenbearbeitungswerkzeug 12 und der Werkzeugträger 14 können in einer Anfangsphase des Verspannens zunächst eine Relativbewegung zueinander ausführen. Nach Beendigung der Relativbewegung wird über den Spannhebel 18 eine Spannkraft aufgebaut, über welche das Bodenbearbeitungswerkzeug 12 und der Werkzeugträger 14 aneinander befestigt werden. Der Spannhebel 18 weist einen Werkzeugkontaktbereich auf, welcher beim Verspannen des Bodenbearbeitungswerkzeugs 12 und des Werkzeugträgers 14 miteinander gegen die Kontur der Hebelaufnahmeausnehmung 30b gedrückt wird. Der Werkzeugkontaktbereich befindet sich in dem Verriegelungsabschnitt 34 des Spannhebels 18. Beim Verbringen des Spannhebels 18 in die Verriegelungsstellung befindet sich der Werkzeugkontaktbereich des Spannhebels 18 in Kontakt mit der Kontur Hebelaufnahmeausnehmung 30b.

Ferner weist der Spannhebel 18 einen Trägerkontaktbereich auf, welcher beim Verspannen des Bodenbearbeitungswerkzeugs 12 und des Werkzeugträgers 14 miteinander gegen einen Hebelführungsbereich des Werkzeugträgers 14 gedrückt wird. Beim Verbringen des Spannhebels 18 in die Verriegelungsstellung befindet sich der Trägerkontaktbereich des Spannhebels 18 in Kontakt mit dem Hebelführungsbereich des Werkzeugträgers 14. Der Trägerkontaktbereich des Spannhebels 18 weist eine konvex gekrümmte Kontaktfläche 36 auf. Der Hebelführungsbereich des Werkzeugträgers 14 weist eine konkav gekrümmte Kontaktfläche 38 auf. Die konvex gekrümmte Kontaktfläche 36 am Spannhebel 18 und die konkav gekrümmte Kontaktfläche 38 am Werkzeugträger 14 bilden gemeinsam ein Gleitlager bzw. Drehlager 40 aus. Das Drehlager 40 erlaubt eine geführte Drehbewegung des Spannhebels 18 in Schwenkrichtung γ.

Der als Drahtbiegeteil ausgeführte Spannhebel 18 kann auch als Federbügel bezeichnet werden. Der Spannhebel 18 ist im Wesentlichen U-förmig ausgeführt, wobei die beiden offenen Enden den Verriegelungsabschnitt 34 des Spannhebels 18 bilden. An dem geschlossenen Ende des Spannhebels 18 ergibt sich somit eine Schlaufe, welche als Konturierung 24 dienen kann. Durch Drücken des Spannhebels 18 in Schwenkrichtung γ kann die Konturierung 24 hinter dem am Werkzeugträger 14 als Haken ausgebildeten Halteglied 20 einrasten. Der Spannhebel 18 wird durch das hakenförmige Halteglied 20 in seiner Verriegelungsstellung gehalten sobald die schlaufenförmige Konturierung 24 dieses hintergreift. Der Spannhebel 18 weist eine spiegelsymmetrische Kontur auf, welche ihm seine offene Form verschafft.

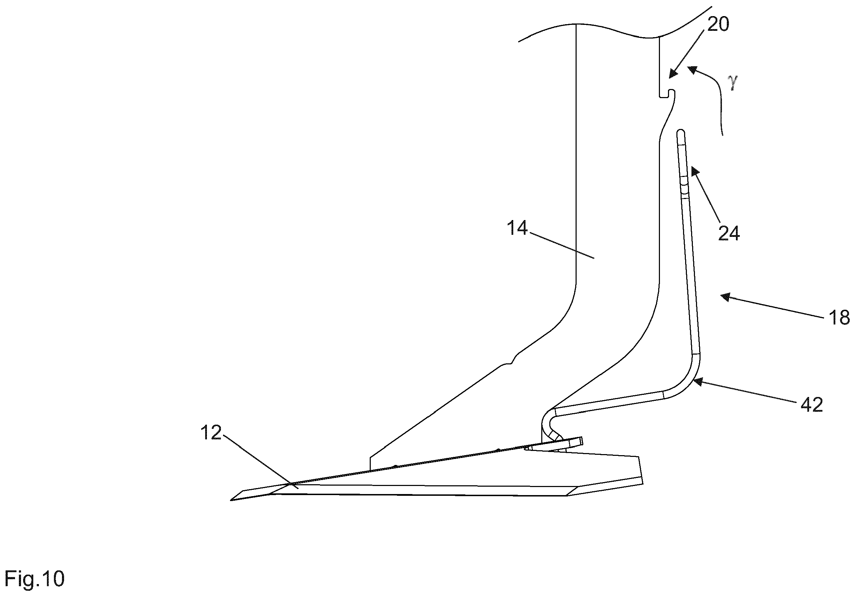

Die Fig. 10 zeigt, dass der Spannhebel 18 beim Verspannen des Bodenbearbeitungswerkzeugs 12 und des Werkzeugträgers 14 miteinander in einem Deformationsbereich 42 elastisch verformt, nämlich elastisch verbogen wird. Der Spannhebel 18 kann insofern auch als Federbügel bezeichnet werden. Das Verbringen des Spannhebels 18 in die Verriegelungsstellung und das Sichern des Spannhebels 18 an dem Halteglied 20 kann von Hand erfolgen.

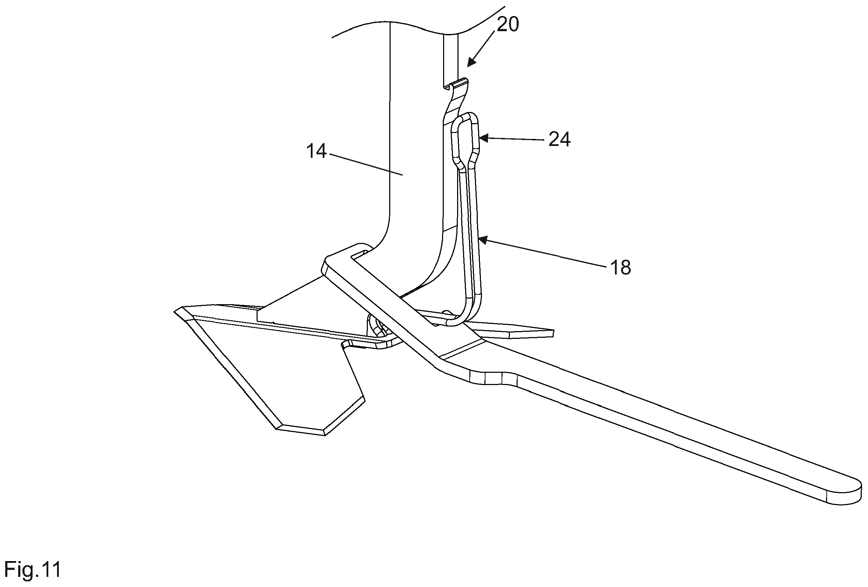

Alternativ kann hierzu ein in Fig. 11 gezeigtes Montagewerkzeug genutzt werden. Das Montagewerkzeug kann von der Seite auf der Vorderseite des Werkzeugträgers 14 und an der Unterseite des Spannhebels 18 angesetzt werden. Es weist hierzu eine seitliche Öffnung auf. Der Spannhebel 18 kann anschließend durch Hebeln des Montageswerkzeuges nach oben in seine Verriegelungsstellung verbracht werden, in der die Konturierung 24 das Halteglied 20 hintergreift. Das Montagewerkzeug kann ebenfalls zum Lösen der Verriegelungsstellung Verwendung finden.

### Bezugszeichen

- 10: Werkzeugwechselsystem
- 12: Bodenbearbeitungswerkzeug
- 14: Werkzeugträger
- 16a, 16b: Kanten
- 18: Spannhebel
- 20: Halteglied
- 22: Auflage
- 24: Konturierung
- 26: Verriegelungseinrichtung
- 28: Eingriffsmechanismus
- 30a, 30b: Aufnahmeausnehmungen
- 32a, 32b: Eingriffskörper
- 34: Verriegelungsabschnitt
- 36: Kontaktfläche
- 38: Kontaktfläche
- 40: Drehlager
- 42: Deformationsbereich
- 44: Markierungen
- 46: elastisches Material

- α, β: Fasenwinkel
- γ: Schwenkrichtung
- x, z: Einsetzrichtungen
- F: Finger

## Patentansprüche

1. Werkzeugwechselsystem (10) für landwirtschaftliche Bodenbearbeitungsmaschinen, mit
- einem Bodenbearbeitungswerkzeug (12), welches dazu eingerichtet, zur Bodenbearbeitung durch Erdreich bewegt zu werden;
- einem Werkzeugträger (14), an welchem das Bodenbearbeitungswerkzeug (12) angeordnet ist, und
- einer Verriegelungseinrichtung (26);
wobei das Bodenbearbeitungswerkzeug (12) und der Werkzeugträger (14) gemeinsam einen Eingriffsmechanismus (28) bilden, über welchen das Bodenbearbeitungswerkzeug (12) und der Werkzeugträger (14) zerstörungsfrei lösbar miteinander in Eingriff bringbar sind;
**dadurch gekennzeichnet, dass** die Verriegelungseinrichtung (26) einen Spannhebel (18) umfasst, mittels welchem der Eingriffsmechanismus (28) verriegelbar ist, wobei der Spannhebel (18) dazu eingerichtet ist, beim Verspannen des Bodenbearbeitungswerkzeugs (12) und des Werkzeugträgers (14) miteinander elastisch verformt zu werden.

2. Werkzeugwechselsystem (10) nach Anspruch 1,
**dadurch gekennzeichnet, dass** der Spannhebel (18) einen Verriegelungsabschnitt (34) aufweist, welcher in eine Hebelaufnahmeausnehmung (30b) des Eingriffsmechanismus (28) einsetzbar ist, wobei die Hebelaufnahmeausnehmung (30b) vorzugsweise in dem Bodenbearbeitungswerkzeug (12) angeordnet ist.

3. Werkzeugwechselsystem (10) nach Anspruch 1 oder 2,
**dadurch gekennzeichnet, dass** das Bodenbearbeitungswerkzeug (12) und der Werkzeugträger (14) mittels des Spannhebels (18) miteinander verspannbar sind.

4. Werkzeugwechselsystem (10) nach Anspruch 2 und 3,
**dadurch gekennzeichnet, dass** der Spannhebel (18) einen Werkzeugkontaktbereich aufweist, welcher dazu eingerichtet ist, beim Verspannen des Bodenbearbeitungswerkzeugs (12) und des Werkzeugträgers (14) miteinander gegen die Kontur der Hebelaufnahmeausnehmung (30b) gedrückt zu werden.

5. Werkzeugwechselsystem (10) nach Anspruch 3 oder 4,
**dadurch gekennzeichnet, dass** der Spannhebel (18) einen Trägerkontaktbereich aufweist, welcher dazu eingerichtet ist, beim Verspannen des Bodenbearbeitungswerkzeugs (12) und des Werkzeugträgers (14) miteinander gegen einen Hebelführungsbereich des Werkzeugträgers (14) gedrückt zu werden.

6. Werkzeugwechselsystem (10) nach Anspruch 5, **dadurch gekennzeichnet, dass**
- der Trägerkontaktbereich des Spannhebels (18) eine konvex gekrümmte Kontaktfläche (36) aufweist; und/oder
- der Hebelführungsbereich des Werkzeugträgers (14) eine konkav gekrümmte Kontaktfläche (38) aufweist.

7. Werkzeugwechselsystem (10) nach Anspruch 5 oder 6, **dadurch gekennzeichnet, dass** der Trägerkontaktbereich und der Hebelführungsbereich gemeinsam ein Drehlager (40) für den Spannhebel (18) bilden, welches eine geführte Drehbewegung des Spannhebels (18) über einen Schwenkwinkelbereich erlaubt.

8. Werkzeugwechselsystem (10) nach einem der vorstehenden Ansprüche, **dadurch gekennzeichnet, dass** die Verriegelungseinrichtung (26) ein Halteglied (20) aufweist, welches dazu eingerichtet ist, den Spannhebel (18) in einer Verriegelungsstellung, in welcher das Bodenbearbeitungswerkzeug (12) und der Werkzeugträger (14) mittels des Spannhebels (18) miteinander verspannt sind, zu halten.

9. Werkzeugwechselsystem (10) nach einem der vorstehenden Ansprüche, **dadurch gekennzeichnet, dass** der Eingriffsmechanismus (28) ein oder mehrere Eingriffskörper (32a, 32b) aufweist, wobei jeder Eingriffskörper (32a, 32b) dazu eingerichtet ist, in eine Aufnahmeausnehmung (30a, 30b) des Eingriffsmechanismus (28) einzugreifen.

10. Werkzeugwechselsystem (10) nach Anspruch 9,
**dadurch gekennzeichnet, dass** ein Eingriffskörper (32a, 32b) des Eingriffsmechanismus (28) dazu eingerichtet ist, in die Hebelaufnahmeausnehmung (30b) einzugreifen, in welche auch der Verriegelungsabschnitt (34) des Spannhebels (18) einsetzbar ist.

11. Werkzeugwechselsystem (10) nach Anspruch 9 oder 10,
**dadurch gekennzeichnet, dass** der eine oder die mehreren Eingriffskörper (32a, 32b) eine Kontaktfläche aufweisen, welche dazu eingerichtet sind, beim Verspannen des Bodenbearbeitungswerkzeugs (12) und des Werkzeugträgers (14) jeweils gegen einen Kontaktabschnitt der Innenkontur einer Aufnahmeausnehmung (30a, 30b) gedrückt zu werden.

12. Werkzeugwechselsystem (10) nach Anspruch 11,
**dadurch gekennzeichnet, dass** die Kontaktfläche des einen oder der mehreren Eingriffskörper (32a, 32b) und der Kontaktabschnitt der Innenkontur der einen oder der mehreren Aufnahmeausnehmungen (30a, 30b) korrespondierende Abfasungen aufweisen.

13. Werkzeugwechselsystem (10) nach zumindest einem der vorstehenden Ansprüche, **dadurch gekennzeichnet, dass** der Spannhebel (18) als Drahtbiegeteil, insbesondere als Federbügel, ausgeführt ist.

14. Bodenbearbeitungswerkzeug (12) für ein Werkzeugwechselsystem (10), insbesondere nach einem der Ansprüche 1 bis 13, welches dazu eingerichtet ist, zur Bodenbearbeitung durch Erdreich bewegt zu werden, wobei das Bodenbearbeitungswerkzeug (12) zumindest eine Aufnahmeausnehmung (30a, 30b) aufweist mittels der das Bodenbearbeitungswerkzeug eingerichtet ist, einen Eingriffsmechanismus (28) mit einem Werkzeugträger (14) zu bilden, um an dem Werkzeugträger (14) angeordnet zu werden,
**gekennzeichnet durch** eine Hebelaufnahmeausnehmung (30b) in die ein Spannhebel (18) ersetzbar ist, wobei der Spannhebel (18) dazu eingerichtet ist, beim Verspannen des Bodenbearbeitungswerkzeugs (12) und des Werkzeugträgers (14) miteinander elastisch verformt zu werden.

15. Verfahren zum Montieren eines Bodenbearbeitungswerkzeugs (12) an einer Bodenbearbeitungsmaschine unter Verwendung eines Werkzeugwechselsystems (10), insbesondere eines Werkzeugwechselsystems (10) nach einem der vorstehenden Ansprüche, mit dem Schritt:
- zerstörungsfrei lösbares In-Eingriff-Bringen eines Bodenbearbeitungswerkzeugs (12) und eines Werkzeugträgers (14) miteinander mittels eines Eingriffsmechanismus (28), welcher durch das Bodenbearbeitungswerkzeug (12) und den Werkzeugträger (14) gemeinsam gebildet wird; **gekennzeichnet durch** den Schritt:
- Verriegeln des Eingriffsmechanismus (28) mittels eines Spannhebels (18) einer Verriegelungseinrichtung (26) des Werkzeugwechselsystems (10), wobei der Spannhebel (18) dazu eingerichtet ist, beim Verspannen des Bodenbearbeitungswerkzeugs (12) und des Werkzeugträgers (14) miteinander elastisch verformt zu werden.

## Claims

1. Tool change system (10) for agricultural soil-cultivating machines, comprising
- a soil-cultivating tool (12) which is designed to be moved through soil for soil cultivation;
- a tool carrier (14) on which the soil-cultivating tool (12) is arranged, and
- a locking device (26);
the soil-cultivating tool (12) and the tool carrier (14) jointly forming an engagement mechanism (28), via which the soil-cultivating tool (12) and the tool carrier (14) can be brought into engagement with one another so as to be detachable in a non-destructive manner;
**characterized in that** the locking device (26) comprises a clamping lever (18) by means of which the engagement mechanism (28) can be locked, the clamping lever (18) being designed to be elastically deformed when the soil-cultivating tool (12) and the tool carrier (14) are clamped to one another.

2. Tool change system (10) according to claim 1,
**characterized in that** the clamping lever (18) has a locking portion (34) which can be inserted into a lever receiving recess (30b) of the engagement mechanism (28), the lever receiving recess (30b) preferably being arranged in the soil-cultivating tool (12).

3. Tool change system (10) according to claim 1 or 2,
**characterized in that** the soil-cultivating tool (12) and the tool carrier (14) can be clamped to one another by means of the clamping lever (18).

4. Tool change system (10) according to claim 2 and 3,
**characterized in that** the clamping lever (18) has a tool contact region which is designed to be pressed against the contour of the lever receiving recess (30b) when the soil-cultivating tool (12) and the tool carrier (14) are clamped to one another.

5. Tool change system (10) according to claim 3 or 4,
**characterized in that** the clamping lever (18) has a carrier contact region which is designed to be pressed against a lever guide region of the tool carrier (14) when the soil-cultivating tool (12) and the tool carrier (14) are clamped to one another.

6. Tool change system (10) according to claim 5, **characterized in that**
- the carrier contact region of the clamping lever (18) has a convex contact surface (36); and/or
- the lever guide region of the tool carrier (14) has a concave contact surface (38).

7. Tool change system (10) according to claim 5 or 6, **characterized in that** the carrier contact region and the lever guide region jointly form a rotary bearing (40) for the clamping lever (18), which allows a guided rotational movement of the clamping lever (18) over a pivoting angle range.

8. Tool change system (10) according to any of the preceding claims,
**characterized in that** the locking device (26) has a holding member (20) which is designed to hold the clamping lever (18) in a locking position in which the soil-cultivating tool (12) and the tool carrier (14) are clamped to one another by means of the clamping lever (18).

9. Tool change system (10) according to any of the preceding claims,
**characterized in that** the engagement mechanism (28) has one or more engagement bodies (32a, 32b), each engagement body (32a, 32b) being designed to engage with a receiving recess (30a, 30b) of the engagement mechanism (28).

10. Tool change system (10) according to claim 9,
**characterized in that** an engagement body (32a, 32b) of the engagement mechanism (28) is designed to engage in the lever receiving recess (30b), into which the locking portion (34) of the clamping lever (18) can also be inserted.

11. Tool change system (10) according to claim 9 or 10,
**characterized in that** the one or more engagement bodies (32a, 32b) have a contact surface, which contact surfaces are designed to each be pressed against a contact portion of the inner contour of a receiving recess (30a, 30b) when the soil-cultivating tool (12) and the tool carrier (14) are clamped.

12. Tool change system (10) according to claim 11,
**characterized in that** the contact surface of the one or more engagement bodies (32a, 32b) and the contact portion of the inner contour of the one or more receiving recesses (30a, 30b) have corresponding bevels.

13. Tool change system (10) according to at least one of the preceding claims,
**characterized in that** the clamping lever (18) is in the form of a bent wire part, in particular a spring clip.

14. Soil-cultivating tool (12) for a tool change system (10), in particular according to any of claims 1 to 13, which is designed to be moved through soil for soil cultivation, the soil-cultivating tool (12) having at least one receiving recess (30a, 30b), by means of which the soil-cultivating tool is designed to form an engagement mechanism (28) with a tool carrier (14) in order to be arranged on the tool carrier (14),
**characterized by** a lever receiving recess (30b) into which a clamping lever (18) can be replaced, the clamping lever (18) being designed to be elastically deformed when the soil-cultivating tool (12) and the tool carrier (14) are clamped to one another.

15. Method for mounting a soil-cultivating tool (12) on a soil-cultivating machine using a tool change system (10), in particular a tool change system (10) according to any of the preceding claims, comprising the step of:
- bringing a soil-cultivating tool (12) and a tool carrier (14) into engagement with one another so as to be detachable in a non-destructive manner, by means of an engagement mechanism (28) which is formed jointly by the soil-cultivating tool (12) and the tool carrier (14); **characterized by** the step of:
- locking the engagement mechanism (28) by means of a clamping lever (18) of a locking device (26) of the tool change system (10), the clamping lever (18) being designed to be elastically deformed when the soil-cultivating tool (12) and the tool carrier (14) are clamped to one another.

## Revendications

1. Système de changement d'outil (10) pour machines agricoles de travail du sol, comportant
- un outil de travail du sol (12) qui est conçu pour être déplacé dans le sol pour le travail du sol ;
- un porte-outil (14), sur lequel est disposé l'outil de travail du sol (12) et
- un dispositif de verrouillage (26) ;
l'outil de travail du sol (12) et le porte-outil (14) formant conjointement un mécanisme de mise en prise (28) par l'intermédiaire duquel l'outil de travail du sol (12) et le porte-outil (14) peuvent être mis en prise l'un avec l'autre de manière amovible et non destructive ;
**caractérisé en ce que** le dispositif de verrouillage (26) comprend un levier de serrage (18) à l'aide duquel le mécanisme de mise en prise (28) peut être verrouillé, le levier de serrage (18) étant conçu pour être déformé élastiquement lors du serrage de l'outil de travail du sol (12) et du porte-outil (14) l'un contre l'autre.

2. Système de changement d'outil (10) selon la revendication 1,
**caractérisé en ce que** le levier de serrage (18) présente une section de verrouillage (34) qui peut être placée dans un évidement de réception (30b) de levier du mécanisme de mise en prise (28), l'évidement de réception (30b) de levier étant de préférence disposé dans l'outil de travail du sol (12).

3. Système de changement d'outil (10) selon la revendication 1 ou 2,
**caractérisé en ce que** l'outil de travail du sol (12) et le porte-outil (14) peuvent être serrés l'un contre l'autre à l'aide du levier de serrage (18).

4. Système de changement d'outil (10) selon la revendication 2 ou 3,
**caractérisé en ce que** le levier de serrage (18) présente une zone de contact avec l'outil qui est conçue pour être pressée contre le contour de l'évidement de réception (30b) de levier lors du serrage de l'outil de travail du sol (12) et du porte-outil (14) l'un contre l'autre.

5. Système de changement d'outil (10) selon la revendication 3 ou 4,
**caractérisé en ce que** le levier de serrage (18) présente une zone de contact avec le support qui est conçue pour être pressée contre une zone de guidage de levier du porte-outil (14) lors du serrage de l'outil de travail du sol (12) et du porte-outil (14) l'un contre l'autre.

6. Système de changement d'outil (10) selon la revendication 5,
**caractérisé en ce que**
- la zone de contact avec le support du levier de serrage (18) présente une surface de contact (36) incurvée de manière convexe ; et/ou
- la zone de guidage de levier du porte-outil (14) présente une surface de contact (38) incurvée de manière concave.

7. Système de changement d'outil (10) selon la revendication 5 ou 6,
**caractérisé en ce que** la zone de contact avec le support et la zone de guidage de levier forment conjointement un palier rotatif (40) pour le levier de serrage (18), qui permet un mouvement de rotation guidé du levier de serrage (18) sur une plage angulaire de pivotement.

8. Système de changement d'outil (10) selon l'une des revendications précédentes, **caractérisé en ce que** le dispositif de verrouillage (26) présente un élément de retenue (20) qui est conçu pour maintenir le levier de serrage (18) dans une position de verrouillage dans laquelle l'outil de travail du sol (12) et le porte-outil (14) sont serrés l'un contre l'autre à l'aide du levier de serrage (18).

9. Système de changement d'outil (10) selon l'une des revendications précédentes, **caractérisé en ce que** le mécanisme de mise en prise (28) présente un ou plusieurs corps de mise en prise (32a, 32b), chaque corps de mise en prise (32a, 32b) étant conçu pour s'engager dans un évidement de réception (30a, 30b) du mécanisme de mise en prise (28).

10. Système de changement d'outil (10) selon la revendication 9,
**caractérisé en ce qu'**un corps de mise en prise (32a, 32b) du mécanisme de mise en prise (28) est conçu pour s'engager dans l'évidement de réception (30b) de levier dans lequel la section de verrouillage (34) du levier de serrage (18) peut également être placée.

11. Système de changement d'outil (10) selon la revendication 9 ou 10,
**caractérisé en ce que** le ou les corps de mise en prise (32a, 32b) présentent une surface de contact qui est conçue pour être pressée respectivement contre une section de contact du contour intérieur d'un évidement de réception (30a, 30b) lors du serrage de l'outil de travail du sol (12) et du porte-outil (14).

12. Système de changement d'outil (10) selon la revendication 11,
**caractérisé en ce que** la surface de contact du ou des corps de mise en prise (32a, 32b) et la section de contact du contour intérieur du ou des évidements de réception (30a, 30b) présentent des biseaux correspondants.

13. Système de changement d'outil (10) selon au moins l'une des revendications précédentes, **caractérisé en ce que** le levier de serrage (18) est réalisé sous la forme d'une pièce pliée en fil, en particulier de ressort en étrier.

14. Outil de travail du sol (12) pour un système de changement d'outil (10), en particulier selon l'une des revendications 1 à 13, qui est conçu pour être déplacé dans le sol pour le travail du sol, l'outil de travail du sol (12) présentant au moins un évidement de réception (30a, 30b) à l'aide duquel l'outil de travail du sol est conçu pour former un mécanisme de mise en prise (28) avec un porte-outil (14) afin d'être disposé sur le porte-outil (14),
**caractérisé par** un évidement de réception (30b) de levier dans lequel un levier de serrage (18) peut être remplacé, le levier de serrage (18) étant conçu pour être déformé élastiquement lors du serrage de l'outil de travail du sol (12) et du porte-outil (14) l'un contre l'autre.

15. Procédé pour le montage d'un outil de travail du sol (12) sur une machine de travail du sol à l'aide d'un système de changement d'outil (10), en particulier un système de changement d'outil (10) selon l'une des revendications précédentes, comportant l'étape consistant à :
- mettre en prise amovible, non destructive d'un outil de travail du sol (12) et d'un porte-outil (14) l'un avec l'autre à l'aide d'un mécanisme de mise en prise (28) formé conjointement par l'outil de travail du sol (12) et le porte-outil (14) ; **caractérisé par** l'étape consistant à :
- verrouiller le mécanisme de mise en prise (28) à l'aide d'un levier de serrage (18) d'un dispositif de verrouillage (26) du système de changement d'outil (10), le levier de serrage (18) étant conçu pour être déformé élastiquement lors du serrage de l'outil de travail du sol (12) et du porte-outil (14) l'un contre l'autre.
